# EUROPÄISCHE PATENTSCHRIFT

(11) **EP 0 970 807 B1**
(45) Veröffentlichungstag und Bekanntmachung des Hinweises auf die Patenterteilung: **19.12.2001**
(21) Anmeldenummer: 99111897.7
(22) Anmeldetag: 21.06.1999
(51) Int. Cl.: B41F 13/08, B65H 27/00, F16C 13/00

(54) **Walze mit variablem Durchmesser**
Roller having a variable diameter
Rouleau avec un diamètre variable

(30) Priorität: 06.07.1998 US 109744
(43) Veröffentlichungstag der Anmeldung: 12.01.2000
(73) Patentinhaber: Heidelberger Druckmaschinen Aktiengesellschaft, 69115 Heidelberg (DE)
(72) Erfinder: Slusarz, Christopher John, 1038 E. Lebanon, ME (US)

(56) Entgegenhaltungen:
- EP-A- 0 253 981
- EP-A- 0 474 971
- EP-A- 0 527 293
- EP-A- 0 638 500
- EP-A- 0 747 312

## Beschreibung

Die vorliegende Erfindung bezieht sich auf eine Walze mit variablem Durchmesser zur Verwendung in technischen Bereichen, in denen der ideale Walzendurchmesser von großer Bedeutung ist.

Die EP-A 0 474 971 beschreibt ein Zugwalzenpaar zur Einstellung der Bahnspannung in einer Rollenrotationsdruckmaschine, bei welchem die Zugwalzen zur Erzeugung einer radialen Dehnung der Walze mit in axialer Richtung versehenen Längsschlitzen ausgebildet sind, und durch entsprechende Stellmittel in radialer Richtung aufweitbar sind.

EP-A 0 527 293 beschreibt eine Vorrichtung zum Aufweiten der Ummantelung einer Walze in einer Tiefdruckmaschine, welche zwei im Inneren der Walze vor einer Achse angeordnete konische Scheiben aufweist, die mit einem in entsprechender Weise komplementär ausgebildeten Innenring der Walze in der Weise zusammenwirken, dass bei einer Verschiebung der konischen Scheiben eine Vergrößerung oder eine Verkleinerung des Umfanges der Walze erfolgt.

EP-A 0 638 500 beschreibt eine Wickeleinrichtung für bahnförmiges Material, welche eine Walze mit variablem Außendurchmesser aufweist, bei der die radiale Aufweitung durch einen im Querschnitt sternförmig ausgebildeten Aufweitmechanismus erfolgt.

US 4,936,561 bezieht sich auf eine Vorrichtung zum Verstellen des Durchmessers einer Falztrommel in einer Rotationsdruckmaschine. Die Falztrommelvorrichtung umfaßt in der Regel Bänder, verschiebbare Stützen, Schraubenspindeln, Sonnenräder, eine Differentialvorrichtung sowie einen Mechanismus zum Aktivieren der Differentialvorrichtung. Die verschiebbaren Stützen sind mit einem Innengewinde versehen und stützen die Bänder. Die Schraubenspindeln, die in die Innengewinde eingepaßt sind, weisen Antriebsritzel auf. Die Sonnenräder sind konzentrisch mit der Falztrommel, kämmen die Antriebsritzel und sind drehbar bezüglich der Falztrommel. Der Aktivierungsmechanismus ändert die Phasen der Sonnenräder bezüglich der Falztrommel. Dann drehen sich die Schraubenspindeln, und die Bänder dehnen sich bzw. ziehen sich zusammen, wodurch der effektive Durchmesser der Falztrommel verstellt wird, um eine Voreinstellung der Falzmaschine zu bewirken.

US 5,201,701 betrifft ein verstellbares Falzzylindersystem. Ein erstes Getriebeelement ist vorgesehen, um eine enge Kopplung zu schaffen zwischen den bewegbaren Elementen, wie z. B. den Elementen, die den effektiven Durchmesser eines Falzmesserzylinders verändern können oder einer bewegbaren Klappe eines Falzklappenzylinders. Dazu ist das erste Getriebeelement mittels einer Positionierungsspindel an das betreffende bewegbare Element gekoppelt. Ein zweites Getriebeelement ist an die Spindel gekoppelt sowie drehgekoppelt an die Zylinderwelle. Ein Positionierungs- oder Verstellgetriebe, z. B. ein Differential- oder Umlaufgetriebe, ist in unmittelbarer Nähe zu einer Seitenwand der Maschine und auf den betreffenden Zylinder gerichtet angeordnet. Das Positionierungsgetriebe kann so aktiviert werden, daß es gesteuert werden kann, um das relative Winkelverhältnis zwischen Zufuhrumdrehung und Ausgabeumdrehung zu verändern und ist außerdem an das zweite Getriebeelement gekoppelt, von dem es die Zufuhrumdrehung erhält, sowie an das erste Getriebeelement, dem es die Umdrehung und eine zusätzliche Verstellbewegung überträgt. Die Verstell- oder Positionierungsbewegung des Verstellgetriebes wird über eine Positionssteuerungseinheit, z. B. ein Handrad oder einen ferngesteuerten Positionssteuerungsmotor, gesteuert, die über ein Getriebe an das Verstellgetriebe gekoppelt ist und z. B. von einer geeigneten elektrisch-elektronischen Steuerungseinheit gesteuert wird. Die Steuerungseinheit kann ankommende Datensignale empfangen, die die Verstellbewegung bestimmen, z. B. die Dicke der gefalzten Papierprodukte, die Anzahl Papierprodukte in einem Stapel o. ä.

US 5,039,076 bezieht sich auf einen Falzapparat mit mindestens zwei Falzzylindern, die miteinander kooperierende Falzelemente in Form von Falzmessern oder Falzklappen umfassen. Der Falzapparat ist auf die Verarbeitung von Produkten mit stark variierender Dicke ausgerichtet. Mindestens ein Falzzylinder weist Umfangsabschnitte auf, die in radialer Richtung verstellt werden können.

EP 0 747 312 A2 bezieht sich auf einen Überbau eines Falzapparats, durch den mindestens zwei Bahnen eines flachen Materials einer Zylindereinheit des Falzapparats zugeführt werden. Der Überbau umfaßt mindestens zwei Abnahmewalzen-Anordnungen mit einer jeweiligen Abnahmewalze, die in dem Überbau drehbar gelagert ist. Es ist mindestens eine Ummantelung vorgesehen, die auf die Außenfläche der jeweiligen Abnahmewalze aufgebracht wird, um den Durchmesser der entsprechenden Abnahmewalzen-Anordnung zu regulieren. Ein Antriebsmechanismus ist für den Antrieb der mindestens zwei Abnahmewalzen-Anordnungen vorgesehen, wobei jede der mindestens zwei Abnahmewalzen-Anordnungen eine jeweilige Umfangsgeschwindigkeit aufweist, die von dem regulierten Durchmesser der Abnahmewalzen-Anordnung abhängig ist.

Es hat sich gezeigt, daß mehrseitige Exemplare, die in Bändern transportiert werden, die Tendenz haben, sich zu öffnen. Dieses Problem entsteht durch angetriebene Bandrollen oder -walzen, bei denen die Rollen der Innenbänder sich mit einem anderen Radius bewegen als die Rollen der Außenbänder. Die mehrseitigen Exemplare oder Signaturen öffnen sich teilweise in den Bändern, was sich negativ auf die Auslagequalität auswirkt.

Die vorliegende Erfindung hat zum Ziel, es einem Drucker zu ermöglichen, daß er bei jedem Druckauftrag mit einem idealen Rollen- oder Walzendurchmesser arbeiten kann.

Ein weiteres Ziel der vorliegenden Erfindung besteht darin, einen Walzenkörper so elastisch zu gestalten, daß der Durchmesser der Walze verändert werden kann.

Darüber hinaus soll durch die vorliegende Erfindung eine Veränderung des Rollen- oder Walzendurchmessers ermöglicht werden, wenn das Produkt sich ändert, wodurch die Qualität des Produkts verbessert wird.

Erfindungsgemäß umfaßt eine Walze eine Ummantelung mit allen Merkmalen des Anspruchs 1.

Gemäß einer weiteren Ausführungsform kann die Ummantelung elastisch genug sein, um ihren Durchmesser zu verändern, aber starr genug sein, um den Durchmesser auf ihrer ganzen Länge konstant zu halten. Da diese Ummantelung in radiale Richtung dehnbar ist, kann ein gewünschter Walzendurchmesser entsprechend den Anforderungen des betreffenden Produktionslaufs eingestellt werden, ohne daß die Ummantelung der entsprechenden Walzen gewechselt werden muß.

Darüber hinaus kann eine beispielhafte Ummantelung gemäß der vorliegenden Erfindung auf Stützen montiert sein. Das System von Öffnungen auf der Umfangsoberfläche der Ummantelung umfaßt eine Vielzahl von Öffnungen, die in axialer Richtung auf der Ummantelung angeordnet sind. Die axial verlaufenden Öffnungen befinden sich im Innern der Ummantelung, während andere Öffnungen des Systems so angeordnet sind, daß sie an einer der Seitenkanten der Ummantelung offen sind. So kann eine Elastizität der Ummantelung geschaffen werden, die eine Dehnung der röhrenförmigen Ummantelung ermöglicht. Die Starrheit der Ummantelung bleibt durch zahlreiche Materialbrücken zwischen den aneinandergrenzenden Öffnungen erhalten. An einer Innenfläche der Ummantelung können ringförmige abgeschrägte Abschnitte vorgesehen sein, die die radiale Dehnung der Ummantelung möglich machen.

Die Ummantelung kann z. B. aus einer Metallröhre oder einem Kunststoff bestehen. Damit kein Schmutz in die Walze eindringen kann, können die axial verlaufenden Öffnungen mit einem synthetischen Gummimaterial ausgefüllt sein.

Gemäß einer beispielhaften Ausführungsform der Erfindung können die radial verlaufenden Stützen der Ummantelung bezüglich einer Mittelachse, die zwischen den Seitenrahmen angeordnet ist, in axiale Richtung verschiebbar angebracht sein. Eine radial verlaufende Mittelstütze der Ummantelung kann fest angebracht sein, so daß sie nicht axial verschiebbar ist, wodurch verhindert wird, daß sich die Walze von einem Ende zum anderen bewegt. Die Gleitbewegung dieser Stützen bewirkt die radiale Dehnung der Ummantelung.

Die Mittelachse verläuft axial durch die Ummantelung und umfaßt einen ersten, einen zweiten und einen mittleren Achsenabschnitt, durch die jeweils eine Stellstange verläuft. Die Stellstange umfaßt Stellelemente, an denen die äußeren Stützen der Ummantelung befestigt sind. Die Verbindung zwischen den äußeren Stützen und den Stellelementen erfolgt über Befestigungselemente, die durch Öffnungen in den Achsenabschnitten verlaufen und so die äußeren Stützen mit der Stellstange verbinden. Die Stellstange umfaßt ein linkes Gewinde und ein rechtes Gewinde, die ein gleichzeitiges Bewegen beider Stützen ermöglichen. Wenn also die Stellstange (z. B. mittels eines Handrads oder einer elektrischen Vorrichtung) gedreht wird, bewegen sich folglich beide Stützen entweder aufeinander zu, wodurch der Durchmesser der Ummantelung vergrößert wird, oder voneinander weg, wodurch der Durchmesser der Ummantelung verkleinert wird. Die Innenfläche der röhrenförmigen Ummantelung umfaßt zwei ringförmige Abschnitte, die abgeschrägt sind. Die Stützen weisen an ihrer Außenoberfläche entsprechende, entgegengesetzt verlaufende Schrägen auf. Werden die Stützen also in axialer Richtung gegen die abgeschrägten ringförmigen Abschnitte der Innenfläche der Ummantelung bewegt, vergrößert oder verkleinert sich der Durchmesser der Ummantelung.

Dadurch kann der Durchmesser einer Bandwalze verstellt werden, um optimale Betriebsbedingungen für den Transport von mehrseitigen Exemplaren oder Signaturen in einer Maschine zu schaffen, in der bogenartige Materialien verarbeitet werden, z. B. in einem Falzapparat.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:
- Fig. 1: einen Längsschnitt entlang der Mittellinie einer Walze gemäß einer beispielhaften Ausführungsform der vorliegenden Erfindung;
- Fig. 2: eine perspektivische Ansicht der Ummantelung der Walze sowie ein beispielhaftes System von Öffnungen; und
- Fig. 3: eine schematische Ansicht einer beispielhaften Ausführungsform einer Falzapparat-Auslage und eines Falzapparats, bei dem die Walze einen dehnbaren Durchmesser aufweist.

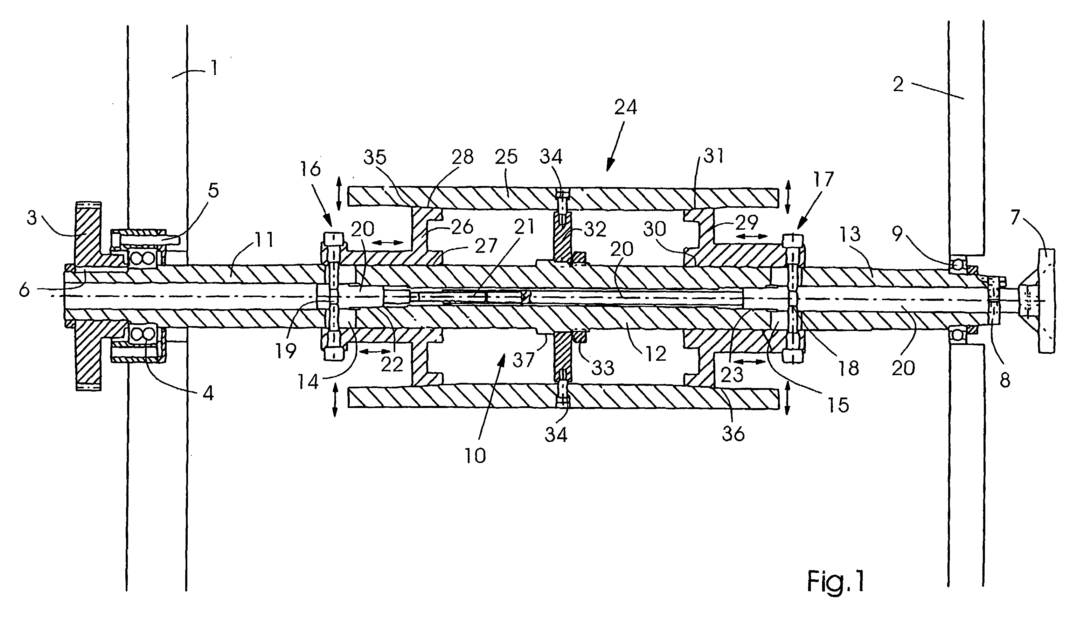

Wie in Fig. 1 gezeigt ist, wird eine beispielhafte Bandwalze 24 von einer Trägerachse 10 gehalten, deren Enden in den Lagern 4 und 9 an den Seitenrahmen 1 bzw. 2 z. B. eines Falzapparats gelagert sind. In der in Fig. 1 gezeigten Ausführungsform handelt es sich bei den Lagern 4 bzw. 9 um Kugellager, von denen eines mittels einer Sicherungsschraube 5 an dem Seitenrahmen 1 fest angebracht ist. Die Achse 10 wird von einem Antrieb 3 gedreht, der mittels eines Keils 6 und einer geeigneten Sicherungsmutter an dem ersten Achsenabschnitt 11 der Achse 10 fest angebracht ist. An dem gegenüberliegenden Seitenrahmen 2 ist z. B ein Handrad 7 angeordnet und mit einem Lagerring 8 an einem dritten Achsenabschnitt 13 befestigt, der mittels eines Lagers 9 an dem Seitenrahmen 2 angebracht ist. Die Achse 10 verläuft entlang einer Längsachse der Ummantelung 25 und umfaßt den ersten Achsenabschnitt 11, einen zweiten mittleren Achsenabschnitt 12 und einen dritten Achsenabschnitt 13. Der erste und der dritte Achsenabschnitt 11 bzw. 13 sind in den Seitenrahmen 1 bzw. 2 gelagert.

Der mittlere Abschnitt 12 bildet eine Basis, auf der die äußeren Stützen 26, 29 montiert sind, und ermöglicht eine seitliche Bewegung der Stützen 26, 29. Die äußeren Stützen 26, 29, die die endlose Ummantelung 25 tragen, verlaufen ringförmig um den mittleren Achsenabschnitt 12 herum und können so bewegt werden, wie durch die doppelten Pfeile angezeigt ist. Die äußeren Stützen 26, 29 können sich axial auf den entsprechenden Gleitflächen 27, 30 bewegen und weisen abgeschrägte Abschnitte 28, 31 auf, die dem ersten und dem zweiten schrägen Abschnitt 35 bzw. 36 entsprechen, die auf der Innenfläche der Ummantelung 25 vorgesehen sind. Die an die äußeren Stützen 26, 29 montierten Befestigungselemente 16, 17 verbinden die äußeren Stützen 26, 29 mit den Stellelementen 18 bzw. 19, die an der Stellstange 20 vorgesehen sind. Bei den Befestigungselementen 16, 17 kann es sich um ein Paar Stifte oder Schrauben handeln, die durch die Öffnungen 14, 15 auf dem jeweiligen Achsenabschnitt 11, 12 und 13 verlaufen.

Die Stellstange 20 erstreckt sich durch alle Abschnitte 11, 12 und 13 der Achse 10, aber nur teilweise in den Achsenabschnitt 11, der in dem Seitenrahmen 1 gelagert ist. Die Drehbewegung der Stellstange 20 kann z. B. über das Handrad 7 bewirkt werden, wie in Fig. 1 gezeigt ist. Sie kann aber auch auf eine beliebige andere Weise bewirkt werden, z. B. durch eine Fernantriebsvorrichtung wie einen Elektromotor, der mit einer Steuerungsvorrichtung versehen ist, die es ermöglicht, den Durchmesser der dehnbaren Walze im voraus einzustellen, um den Walzendurchmesser zu erhalten, der für den entsprechenden Druck- und Transportauftrag bogenartiger Produkte am besten geeignet ist. Die Stellstange 20 weist zwei Gewindeabschnitte 22, 23 auf. Die rechte Seite des Gewindeabschnitts 22 ist, wie in Fig. 1 gezeigt ist, unterhalb der äußeren Stütze 26 angeordnet. Innerhalb des mittleren Abschnitts 12, durch den die Stellstange 20 verläuft, umfaßt die Stellstange 20 eine Keilnut 21, in der die Abschnitte der Stellstange 20 so verkeilt sind, daß die Stellstange 20 verlängert werden kann. Wird die Stellstange 20 gedreht, so bewegen die Gewindeabschnitte 22, 23 die Stellelemente 18, 19 innerhalb der Stellstange in dieselbe Richtung; entweder aufeinander zu oder voneinander weg.

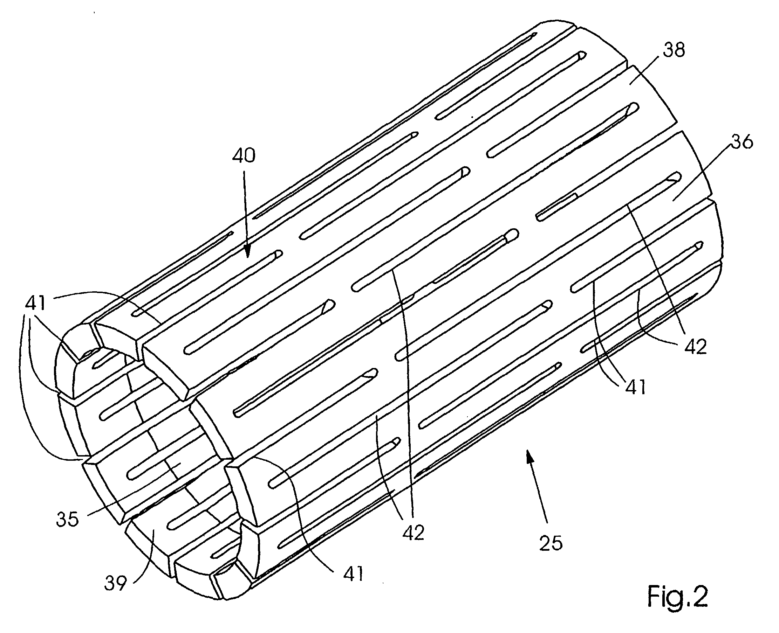

Die Länge der Gewindeabschnitte 22, 23 und deren Abstände bestimmen, wie weit die Stellelemente 18, 19 bewegt werden können. Da die Befestigungselemente 16, 17 die äußeren Stützen 26, 29 mit der Stellstange 20 verbinden, bewirkt eine seitliche Bewegung der Stellelemente 18, 19 bei Drehung der Stellstange 20 eine Gleitbewegung der äußeren Stützen 26, 29 in axialer Richtung parallel zu der Achse 10. Folglich bewegen sich die schrägen Abschnitte 28, 31 auf den äußeren Stützen 26, 29 entweder aufeinander zu oder voneinander weg. Diese Bewegung bewirkt wiederum, daß sich beide äußere Stützen 26, 29 bezüglich des ersten und des zweiten schrägen Abschnitts 35, 36 verschieben, die ringförmig in der Innenfläche 39 der Ummantelung 25 verlaufen (s. Fig. 2). Die Bewegung der Ummantelung 25 in radialer Richtung wird in Fig. 1 durch doppelte Pfeile angezeigt, die in der Nähe der Seitenkanten der Ummantelung 25 vertikal verlaufen. Bewegen sich die äußeren Stützen 26, 29 in einer axialen Gleitbewegung auf der Stellstange 20 voneinander weg, verringert sich der Durchmesser der Ummantelung 25, da die schrägen Abschnitte sich voneinander lösen. Bewegen sich die äußeren Stützen 26, 29 dagegen aufeinander zu, vergrößert sich der Durchmesser der Ummantelung 25, da sich die schrägen Abschnitte 28, 31 und 35, 36 ineinander bewegen.

Die mittlere Stütze 32 ist mittels Sicherungsschrauben 34 oder eines Stiftes an der Ummantelung 25 befestigt und ermöglicht eine radiale Bewegung der Ummantelung 25 bezüglich der Achse 10. Der mittlere Abschnitt 12 der Achse 10 weist einen Feststellabschnitt 37 auf, an dem die mittlere Stütze 32 angeordnet ist, wobei die mittlere Stütze 32 von einer Sicherungsmutter 33, die an dem Feststellabschnitt 37 befestigt ist, in ihrer axialen Position gehalten wird. Die mittlere Stütze 32 verhindert, daß sich die dehnbare Ummantelung 25 zwischen den Endabschnitten der Achse 10 während der Durchmessereinstellung hin- und herbewegt.

Fig. 2 bietet eine perspektivische Ansicht der Ummantelung 25 der Walze 24, in der gezeigt ist, daß die Ummantelung 25 mit einem System von schlitzartigen Öffnungen 41, 42 versehen ist. Die röhrenförmige Ummantelung 25 umfaßt eine Innenfläche 39 und eine Außenfläche 38. Die Ummantelung 25 kann z. B. aus Metall oder Kunststoff oder einem beliebigen anderen Material gefertigt sein. Auf der Innenfläche der Ummantelung 25 sind die ringförmig verlaufenden schrägen Abschnitte 35, 36 gezeigt, die von den äußeren Stützen 26, 29 in Fig. 1 gestützt werden.

Das in Fig. 2 gezeigte System 40 von Öffnungen 41, 42 auf der Außenfläche 38 der Ummantelung 25 umfaßt die schlitzförmigen Öffnungen 41, 42, die in axialer Richtung zu der Ummantelung 25 verlaufen. Das System 40 von Öffnungen 41, 42 umfaßt Öffnungen 42, die ganz innerhalb der Manteloberfläche verlaufen und keine offenen seitlichen Enden aufweisen, sowie Öffnungen 41, die an den Seitenkanten der Ummantelung 25 offene Enden aufweisen. In der in Fig. 2 gezeigten Ausführungsform weist das System 40 immer eine Öffnung 42 ohne offene Enden in einer Linie mit einer Öffnung 41 mit seitlich offenem Ende auf. Dieses System 40 erstreckt sich über die gesamte Außenfläche 38 der Ummantelung 25. Das System 40 gewährleistet eine Elastizität und eine Starrheit der Ummantelung 25, wodurch eine Veränderung des Durchmessers der Ummantelung 25 ermöglicht wird. Die Öffnungen 41, 42 des Schlitzsystems 40 sind mit einem elastischen synthetischen Gummimaterial ausgefüllt. Wird die Ummantelung 25 gedehnt, so verhindert dieses Material das Eindringen von Schmutz in die Öffnungen 41, 42, der Ummantelung 25. Das synthetische Material, mit dem die Öffnungen 41, 42 ausgefüllt sind, kann jedes beliebige elastische Material sein, das auf Größenveränderungen des Systems 40 von Öffnungen 41, 42 reagiert.

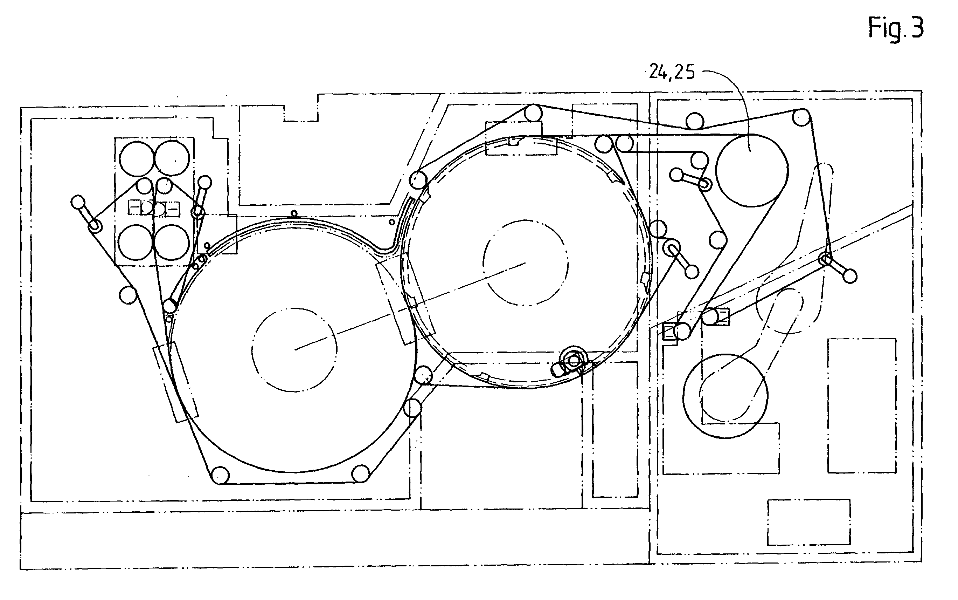

Fig. 3 zeigt eine Seitenansicht eines beispielhaften Falzapparats für eine Rotationsdruckmaschine. Signaturen, die von einer Materialbahn abgetrennt werden, werden kreuzgefalzt und bilden so mehrseitige Exemplare, die durch den Falzapparat oder über entsprechende Bänder transportiert werden. Die mehrseitigen Exemplare werden entweder durch Bänder transportiert oder bewegen sich auf einer Umfangsoberfläche eines Falzzylinders, z. B. eines Falzmesserzylinders, der mit einem Klappenzylinder zusammenarbeitet. Die Signaturen oder mehrseitigen Exemplare werden in einen Auslageabschnitt transportiert, in dem sie von Bändern gehalten werden.

Die Bänder bewegen sich um die Walze 24 herum, die eine dehnbare Ummantelung 25 aufweist, durch die der Durchmesser der Ummantelung 25 der Walze 24 entsprechend den Erfordernissen der zu transportierenden Produkte verstellt werden kann, um ein Öffnen der Produkte während des Transportvorgangs auf den Bändern zu verhindern.

Die Voreinstellung des Durchmessers kann über eine Fernbedienung erfolgen, wie es in Zusammenhang mit Fig. 1 beschrieben wurde, wobei die Durchmesser so eingestellt werden können, daß sie für die jeweiligen Produktionserfordernisse optimal sind. Die Vergrößerung des Durchmessers der Ummantelung 25 kann z. B. durchgeführt werden, während andere Parameter wie die Farbzonenschrauben oder die Wendestangenpositionen während des Bahneinzugs eingestellt werden. Dadurch werden vom Anlaufen der Druckmaschine an Produkte höchster Qualität erzeugt.

### LISTE DER BEZUGSZEICHEN

- 1: seitlicher Rahmen
- 2: seitlicher Rahmen
- 3: Antrieb
- 4: Lager
- 5: Sicherungsschraube
- 6: Keil
- 7: Handrad
- 8: Lagerring
- 9: Lager
- 10: Trägerachse
- 11: erster Trägerachsenabschnitt
- 12: mittlerer Trägerachsenabschnitt
- 13: dritter Trägerachsenabschnitt
- 14: Öffnung
- 15: Öffnung
- 16: Befestigungselement
- 17: Befestigungselement
- 18: Stellelement
- 19: Stellelement
- 20: Stellstange
- 21: Keilnut
- 22: Gewindeabschnitt
- 23: Gewindeabschnitt
- 24: Bandwalze
- 25: Ummantelung
- 26: äußere Stütze
- 27: Gleitabschnitt
- 28: schräger Abschnitt
- 29: äußere Stütze
- 30: Gleitabschnitt
- 31: schräger Abschnitt
- 32: mittlere Stütze
- 33: Feststellmutter
- 34: Sicherungsschrauben
- 35: schräger Abschnitt
- 36: schräger Abschnitt
- 37: Feststellabschnitt
- 38: Außenfläche
- 39: Innenfläche
- 40: Öffnungssystem
- 41: Öffnung
- 42: Öffnung

## Patentansprüche

1. Walze mit einer Ummantelung (25), die in radiale Richtung bezüglich einer Längsachse der Ummantelung (25) dehnbar und röhrenförmig gestaltet ist, und die ein System (40) von in der Ummantelung (25) angeordneten Öffnungen (41, 42) aufweist,
**dadurch gekennzeichnet,**
**daß** das System (40) von Öffnungen (41, 42) Öffnungen (42), die ganz innerhalb der Ummantelung (25) verlaufen und keine offenen seitlichen Enden aufweisen, sowie Öffnungen (41), die an den Seitenkanten der Ummantelung (25) offene Enden aufweisen, umfaßt.

2. Walze nach Anspruch 1,
**dadurch gekennzeichnet,**
**daß** die Ummantelung (25) an Stützen (26, 29, 32) befestigt ist.

3. Walze nach Anspruch 1,
**dadurch gekennzeichnet,**
**daß** das System (40) von Öffnungen (41, 42) eine Vielzahl von Öffnungen (41, 42) umfaßt, die in axialer Richtung zu der Ummantelung (25) verlaufen.

4. Walze nach Anspruch 1,
**dadurch gekennzeichnet,**
**daß** die Ummantelung (25) abgeschrägte Abschnitte (35, 36) umfaßt.

5. Walze nach Anspruch 4,
**dadurch gekennzeichnet,**
**daß** die abgeschrägten Abschnitte (35, 36) an der Innenfläche (39) der Ummantelung (25) angeordnet sind.

6. Walze nach Anspruch 1,
**dadurch gekennzeichnet,**
**daß** die Ummantelung (25) eine Metallröhre ist.

7. Walze nach Anspruch 1,
**dadurch gekennzeichnet,**
**daß** die Öffnungen (41, 42) mit einem synthetischen Gummimaterial gefüllt sind.

8. Walze nach Anspruch 2,
**dadurch gekennzeichnet,**
**daß** die äußeren Stützen (26, 29) der Ummantelung (25) verschiebbar montiert sind.

9. Walze nach Anspruch 8,
**dadurch gekennzeichnet,**
**daß** die äußeren Stützen (26, 29) in axialer Richtung bezüglich einer Achse (10) verschiebbar sind.

10. Walze nach Anspruch 8,
**dadurch gekennzeichnet,**
**daß** eine Stütze (32) fest montiert ist und nicht in axialer Richtung verschoben werden kann.

11. Walze nach Anspruch 10,
**dadurch gekennzeichnet,**
**daß** die eine Stütze (32) fest an der Ummantelung (25) befestigt ist.

12. Walze nach Anspruch 10,
**dadurch gekennzeichnet,**
**daß** die eine Stütze durch eine mittlere Stütze (32) gebildet wird, die eine radiale Bewegung der Ummantelung (25) ermöglicht.

13. Walze nach Anspruch 9,
**dadurch gekennzeichnet,**
**daß** die Achse (10) eine Vielzahl von Abschnitten (11, 12, 13) umfaßt.

14. Walze nach Anspruch 13,
**dadurch gekennzeichnet,**
**daß** die Achse (10) einen ersten Abschnitt (11), einen mittleren Abschnitt (12) und einen dritten Abschnitt (13) umfaßt.

15. Walze nach Anspruch 13,
**dadurch gekennzeichnet,**
**daß** eine Stellstange (20) durch die Abschnitte (11, 12, 13) der Achse (10) verläuft.

16. Walze nach Anspruch 15,
**dadurch gekennzeichnet,**
**daß** die Stellstange (20) Stellelemente (18, 19) umfaßt.

17. Walze nach Anspruch 13,
**dadurch gekennzeichnet,**
**daß** die Achse (10) Öffnungen (14, 15) umfaßt, durch die Befestigungselemente (16, 17) verlaufen.

18. Walze nach Anspruch 17,
**dadurch gekennzeichnet,**
**daß** die Befestigungselemente (16, 17) die äußeren Stützen (26, 29) mit der Stellstange (20) verbinden.

19. Walze nach Anspruch 15,
**dadurch gekennzeichnet,**
**daß** die Stellstange (20) einen rechten Gewindeabschnitt (23) und einen linken Gewindeabschnitt (22) aufweist, die die Enden des äußeren Abschnitts der Achse (10) halten.

20. Walze nach einem der Ansprüche 2 bis 19,
**dadurch gekennzeichnet,**
**daß** die eine äußere Stütze (26) einen ersten schrägen Abschnitt (28) und die andere äußere Stütze (29) einen zweiten schrägen Abschnitt (31) aufweist, die verschiebbar in Kontakt mit der Ummantelung (25) stehen.

21. Walze nach Anspruch 20,
**dadurch gekennzeichnet,**
**daß** die Schräge des ersten schrägen Abschnitts (28) und die Schräge des zweiten schrägen Abschnitts (31) so angeordnet sind, daß sie aufeinander zu gerichtet sind.

22. Walze nach Anspruch 20,
**dadurch gekennzeichnet,**
**daß** die schrägen Abschnitte (28, 35, 31, 36) gegeneinander gerichtet sind.

23. Auslage eines Falzapparats,
**gekennzeichnet durch**
eine Walze nach einem der vorhergehenden Ansprüche.

24. Falzapparat mit verschiedenen Bandabschnitten zum Transport flacher Produkte, wobei die Bandabschnitte von Walzen gestützt werden,
**gekennzeichnet durch**
eine Bandwalze (24) mit einer Ummantelung (25) nach einem der Ansprüche 1 bis 22.

## Claims

1. Roller having a mantle (25) expandable in a radial direction relative to a longitudinal axis of said mantle (25), said mantle being tubular shaped and having a pattern (40) of openings (41,42) disposed in said mantle (25)
**characterized in**
**that** the pattern (40) of openings (41, 42) includes openings (42) located entirely within the mantle (25) and having no open lateral ends, as well as openings (41) having open ends at the lateral edges of the mantle (25).

2. Roller according to claim 1,
**characterized in**
**that** said mantle (25) is mounted on supports (26, 29, 32).

3. Roller according to claim 1,
**characterized in**
**that** said pattern (40) of openings (41, 42) includes a plurality of openings (41, 42) extending in axial direction of said mantle (25).

4. Roller according to claim 1,
**characterized in**
**that** said mantle (25) includes inclined portions (35, 36).

5. Roller according to claim 4,
**characterized in**
**that** said inclined portions (35, 36) are provided on the inner surface (39) of said mantle (25).

6. Roller according to claim 1,
**characterized in**
**that** said mantle (25) is a metal tubing.

7. Roller according to claim 1,
**characterized in**
**that** said openings (41, 42) are filled with a synthetic rubber material.

8. Roller according to claim 2,
**characterized in**
**that** the outer supports (26, 29) of said mantle (25) are mounted to be slidable.

9. Roller according to claim 8,
**characterized in**
**that** said outer supports (26, 29) are slidable in axial direction relative to a shaft (10).

10. Roller according to claim 8,
**characterized in**
**that** one support (32) is fixed and cannot be moved in axial direction.

11. Roller according to claim 10,
**characterized in**
**that** said one support (32) is fixedly secured to said mantle (25).

12. Roller according to claim 10,
**characterized in**
**that** said one support is formed by a centre support (32) which allows for radial movement of said mantle (25).

13. Roller according to claim 9,
**characterized in**
**that** said shaft (10) includes a plurality of portions (11, 12, 13).

14. Roller according to claim 13,
**characterized in**
**that** said shaft (10) includes a first portion (11), a centre portion (12) and a third portion (13).

15. Roller according to claim 13,
**characterized in**
**that** an adjustment rod (20) extends through said portions (11, 12, 13) of said shaft (10).

16. Roller according to claim 15,
**characterized in**
**that** said adjustment rod (20) includes adjustment elements (18, 19).

17. Roller according to claim 13,
**characterized in**
**that** said shaft (10) comprises openings (14, 15) through which mounting elements (16, 17) extend.

18. Roller according to claim 17,
**characterized in**
**that** said mounting elements (16, 17) connect said outer supports (26, 29) to said adjustment rod (20).

19. Roller according to claim 15,
**characterized in**
**that** said adjustment rod (20) includes a right hand thread portion (23) and a left hand thread portion (22), engaging the ends of said outer portion of said shaft (10).

20. Roller according to one of claims 2 to 19,
**characterized in**
**that** one of said outer supports (26) includes a first inclined portion (28) and the other of said outer supports (29) includes a second inclined portion (31), said inclined portions being slidably in contact with said mantle 25).

21. Roller according to claim 20,
**characterized in**
**that** the inclination of said first inclined portion (28) and the inclination of said second inclined portion (31) are arranged such that they are oriented towards each other.

22. Roller according to one or more of the preceding claims,
**characterized in**
**that** the inclined portions (28, 35, 31, 36) are oriented counter to each other.

23. Delivery of a folder apparatus,
**characterized by**
a roller according to one of the preceding claims.

24. Folder apparatus having various tape sections for conveying flat products, the tape sections being supported by rollers,
**characterized by**
a tape roller (24) having a mantle (25) according to one of claims 1 to 22.

## Revendications

1. Cylindre comportant une enveloppe (25), qui est agencée de manière à être extensible dans une direction radiale par rapport à un axe longitudinal de l'enveloppe (25), possède une forme tubulaire et comporte un système (40) d'ouvertures (41, 42) disposées dans l'enveloppe (25), **caractérisé en ce que** le système (40) d'ouvertures (41, 42) comprend des ouvertures (42) qui s'étendent complètement à l'intérieur de l'enveloppe (25) et ne possèdent aucune extrémité latérale ouverte, ainsi que des ouvertures (41) qui possèdent des extrémités ouvertes, sur les bords latéraux de l'enveloppe (25).

2. Cylindre selon la revendication 1, **caractérisé en ce que** l'enveloppe (25) est fixée sur des appuis (26, 26, 29, 32).

3. Cylindre selon la revendication 1, **caractérisé en ce que** le système (40) d'ouvertures (41, 42) comporte une multiplicité d'ouvertures (41, 42), qui s'étendent dans une direction axiale par rapport à l'enveloppe (25).

4. Cylindre selon la revendication 1, **caractérisé en ce que** l'enveloppe (25) comprend des parties biseautées (35, 36).

5. Cylindre selon la revendication 4, **caractérisé en ce que** les parties biseautées (35, 36) sont disposées sur la surface intérieure (39) de l'enveloppe (25).

6. Cylindre selon la revendication 1, **caractérisé en ce que** l'enveloppe (25) est un tube métallique.

7. Cylindre selon la revendication 1, **caractérisé en ce que** les ouvertures (41, 42) sont remplies par un matériau formé de caoutchouc synthétique.

8. Cylindre selon la revendication 2, **caractérisé en ce que** les appuis extérieurs (26, 29) de l'enveloppe (25) sont montés de manière à être déplaçables.

9. Cylindre selon la revendication 8, **caractérisé en ce que** les appuis extérieurs (26, 29) sont déplaçables dans une direction axiale par rapport à un axe (10).

10. Cylindre selon la revendication 8, **caractérisé en ce qu'**un appui (32) est monté de façon fixe et ne peut pas se déplacer dans une direction axiale.

11. Cylindre selon la revendication 10, **caractérisé en ce qu'**un appui (32) est fixé à demeure à l'enveloppe (25).

12. Cylindre selon la revendication 10, **caractérisé en ce que** l'appui est formé par un appui médian (32), qui permet un déplacement radial de l'enveloppe (25).

13. Cylindre selon la revendication 9, **caractérisé en ce que** l'axe (10) comprend une multiplicité de sections (11, 12, 13).

14. Cylindre selon la revendication 13, **caractérisé en ce que** l'axe (10) comporte une première section (11), une section médiane (12) et une troisième section (13).

15. Cylindre selon la revendication 13, **caractérisé en ce qu'**une tige de réglage (20) traverse les sections (11, 12, 13) de l'axe (10).

16. Cylindre selon la revendication 15, **caractérisé en ce que** la tige de réglage (20) comprend des éléments de réglage (18, 19).

17. Cylindre selon la revendication 13, **caractérisé en ce que** l'axe (10) comprend des ouvertures (14, 15), dans lesquelles s'étendent des éléments de fixation (16, 17).

18. Cylindre selon la revendication 17, **caractérisé en ce que** les éléments de fixation (16, 17) relient les appuis extérieurs (26, 29) à la tige de réglage (20).

19. Cylindre selon la revendication 15, **caractérisé en ce que** la tige de réglage (20) comporte une section filetée de droite (23) et une section filetée de gauche (22), qui retiennent les extrémités de la section extérieure de l'axe (10).

20. Cylindre selon l'une des revendications 2 à 19, **caractérisé en ce qu'**un appui extérieur (26) comporte une première section oblique (28) et que l'autre appui extérieur (29) comporte une seconde section oblique (31), ces sections étant en contact avec l'enveloppe (25) en étant déplaçables.

21. Cylindre selon la revendication 20, **caractérisé en ce que** l'inclinaison de la première section oblique (26) et l'inclinaison de la deuxième section oblique (29) sont disposées de telle sorte qu'elles soient dirigées l'une vers l'autre.

22. Cylindre selon la revendication 20, **caractérisé en ce que** les sections obliques (28, 35, 31, 36) sont dirigées à l'opposé l'une de l'autre.

23. Receveur de sortie d'une plieuse, **caractérisé par** un cylindre selon l'une des revendications précédentes.

24. Plieuse comportant différentes sections de bande pour le transport de produits plats, les sections de bande étant supportées par des cylindres, **caractérisé par** un cylindre (24) de bande comportant une enveloppe (25) selon l'une des revendications 1 à 22.
